# EUROPEAN PATENT APPLICATION

(11) **EP 1 361 445 A1**
(43) Date of publication of application: **12.11.2003**
(21) Application number: 01967362.3
(22) Date of filing: 11.09.2001
(51) Int. Cl.: G01P 13/02, G01P 5/02, G01B 11/16, F03D 7/04, G01M 5/00, G01M 7/00

(54) **FLEXURE AIR SPEED INDICATOR AND VANE**

(30) Priority: 22.01.2001 ES 200100142
(71) Applicant: Sociedad Anonima De Instalaciones De Control, 28108 Alcobendas (ES)
(72) Inventor: PINILLA RODRIGUEZ, José, E-28108 Alcobendas (ES); ROMERO PEREZ, Carlos, 28108 Alcobendas (ES)
(74) Representative: Schäfer, Matthias, Dipl.-Ing.
(86) International application number: ES0100344
(87) International publication number: WO02057800

(57) **Abstract**

Flexure wind vane and anemometer characterised in that they form an advanced sensor for determining the speed and direction of the wind in medium to high power wind turbine towers. Its operation is based on the analysis of the structural deformation of the supporting tower. This method also allows the use of the sensor for diagnostic purposes with a view to operating the machine more efficiently.

## Description

### Subject of the present invention

The subject of the present invention, as the title of this descriptive memory indicates, is an advanced sensor used in wind turbine towers to determine the speed and direction of the wind. This type of sensor used to measure the speed and direction of the wind is designed for medium to high power wind turbines. Its operation is based on an analysis of the structural deformation of the supporting tower. This innovative method allows the use of this sensor for diagnostic purposes, with the aim of using the machine more efficiently.

Currently, medium to high power wind turbines (i.e. >100 kvA) have a control system that uses the information supplied by wind vanes and anemometers to yaw the turbine against the wind. The aim of the present innovation is to keep the rotor axis parallel to the direction of the oncoming wind, thus optimising the use of the energy in the wind and at the same time reducing the mechanical stresses that the structure withstands.

This process is based on the fact that when the wind hits the rotor blades, it bends the supporting tower.

This process is based on the bending effect that the wind hitting the rotor blades has on the supporting tower. This deformation depends mainly on the speed and direction of the wind, on whether the machine is running or not, on the vibration modes of the structure and, in general, on the fixed and mobile mechanical components that make up the wind turbine.

### Background

Sensors used currently are devices situated outside the nacelle, behind the wind turbine's rotor blades. The supplied data, speed and direction of the wind, is used by the wind turbine's control system to determine when and how to activate the yaw servomechanisms of the nacelle, and whether to start or to stop the machine.

The data supplied by the sensors is precise enough to start the wind turbine is sufficiently accurate, as the airflow reaches these devices without distortion. However, once the machine is generating energy, the rotation of the blades creates turbulence that affects the sensors, distorting the measurements fed to the control system, especially the measurements of the wind direction.

In addition, conventional sensors require maintenance, such as cleaning and greasing, and they are subject to mechanical wear and tear, as they are mechanical devices with mobile parts.

Measurement errors from traditional sensors, caused by wear and tear, lack of cleanliness and greasing, and above all by turbulence, lead to incorrect responses from the control system when it tries to yaw the nacelle, causing misalignment of the wind turbine.

The wind turbine misalignment leads to a performance loss and creates additional forces that the structure and the mobile parts have to withstand; this lowers the lifetime of the machine due to increased fatigue loads. This fatigue is the main reason why more powerful wind turbines of higher output are not manufactured.

### Invention description

The purpose of the advanced sensor that is being described is to determine the speed and direction of the wind at wind turbines towers, and it is known as flexure wind vane and anemometer. Currently, medium to high power wind turbines (i.e. >100 kvA) have a control system that uses the information supplied by wind vanes and anemometers to yaw the turbine against the wind.

What is new in the invention is that the position of the rotor axis is parallel to the direction of the oncoming wind, optimising the use of the energy of the wind, and reducing at the same time the mechanical stresses that the structure withstands.

The innovation introduced lies in that the rotor axis is parallel to the direction of the oncoming wind, optimising the amount of energy that is used and converted and, at the same time, reducing the mechanical stresses the structure has to withstand.

The method is based on the fact that the wind that hits the rotor blades bends the supporting tower. This deformation depends mainly on the speed and direction of the wind, whether the machine is on or off, on the main vibration modes of the structure and, in general, on the fixed and mobile mechanical components that make up the wind turbine.

The information required to yaw the wind turbine, to start and to stop the machine and to determine the vibration of the structure can be extracted analysing the deformation. This information can be used for diagnostic purposes, as a tool to determine the optimum control algorithms that reduce fatigue loads, or to determine the necessary preventive maintenance tasks.

In order to give a complete description of the invention and to help the reader understand the characteristics of the innovating method, the present descriptive memory is accompanied by several figures that will make it easier to understand the innovations and protection advantages of the invention.

### Brief description of the drawings

Figure 1 shows an operating diagram of the data acquisition and processing system.
Figure 2 shows the tower structure in a vertical position, where the laser-emitting device is situated at the top of the tower and the data acquisition system is situated at the bottom.
Figure 3 shows an example of how data from the projection target is collected.

### Preferred optimal assembly of the invention

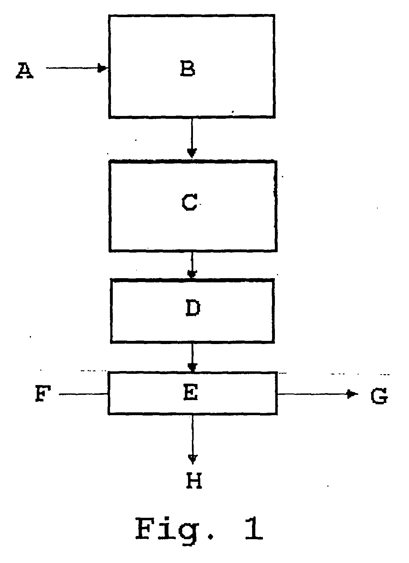

Figure 1 shoes the operating diagram of the data acquisition and processing system, where (A) is the laser beam, (B) is the beam's focussing optical system, (C) is the projection target, (D) is the image capture, (E) is the digital signal processing (DSP) device, (F) is the spectrum analysis, (G) is the wind speed and (H) is the wind direction

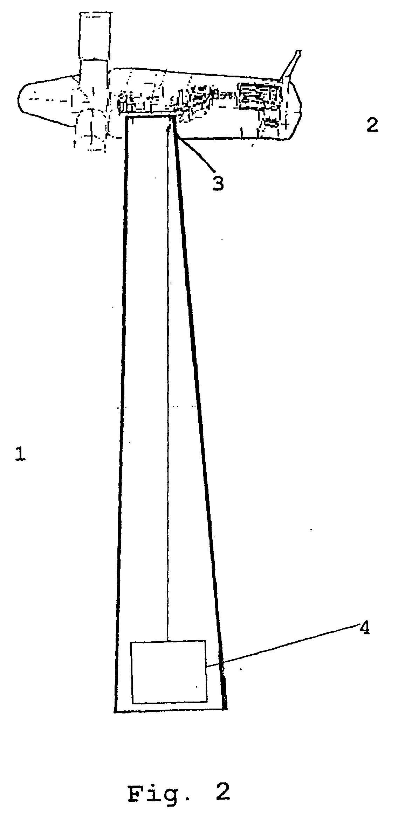

Figure 2 shows the tower structure (1), made up of a laser emitting device (2) and (3), solidarly joined to the inside and at the top of the supporting tower (1), and of a data acquisition and processing system (DAPS), placed inside and at the bottom of the supporting tower (1) .

Unlike Doppler effect anemometers that use variations in the laser beam wavelength to measure the power of the wind, this sensor tracks the movement of the beam's projection in order to measure the deformation of the supporting tower. The result is a less complex sensor that therefore is less expensive.

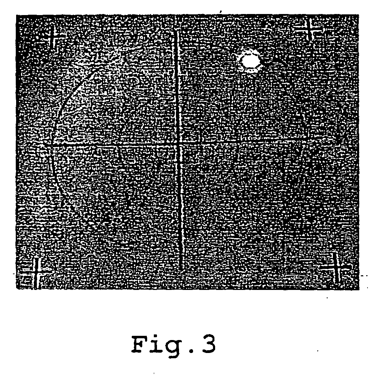

The laser emitting device is directed so that the beam falls on the centre of the DAPS projection target (figure 3) when the wind turbine is not running, as there is no wind. In order to locate the beam on the projection target, the sensor uses an optical device with lenses.

The image capture device samples the projection target, digitalizes the images and sends them to the digital signal processor (DSP), as seen in figure 1 where it is marked as (E) . CCD digital cameras have been successfully evaluated, allowing very low cost solutions.

The digital signal processor (DSP) analyses every image it receives, extracting the data referring to the speed and direction of the wind, then it carries out a spectrum analysis and transmits this data to the control system of the wind turbine.

The working of the sensor: when it is idle due to there being no wind, the laser beam hits the centre of the target. However, when the wind turbine starts running, the resistance offered by the rotor blades to the oncoming wind bends the supporting structure in the opposite direction. The deformation of the tower depends on the speed and direction of the wind, and on the peak stress caused by the energy transformed by the rotor blades. As a result, the laser beam projected on to the target is displaced.

The structure is not only bent, but it also vibrates around the balance point according to the wind turbine vibration modes and to the yaw angle of the nacelle in relation to the wind flow.

The image capture and digitalisation device shows the projection target as well as the position of the beam's projection, as seen in figure 3. The digital signal processor locates the coordinates of the luminous point in each of the images, analysing the movement of this point in time, as well as the frequency domain.

As a result of this analysis, the digital signal processor (DSP) extracts the data referring to the speed and direction of the wind, as well as the vibration modes of the machine. This information is sent to the control system of the wind turbine, or to the diagnostic and preventive maintenance system of the machine.

This new method is immune to turbulence produced by the rotation of the blades when the wind turbine is running. In addition, it doesn't contain any mobile component, which means that it is not subject to wear and tear problems that reduce the sensor's lifetime, and it is inexpensive, which means that it doesn't have a significant impact on the total cost of the wind turbine.

Now that the nature of this invention and the optimal way to manufacture it have been sufficiently described, it only remains to be said that variations are possible in form, materials and the layout of the invention as a whole or its components without substantially changing the nature of the invention claimed hereunder.

## Claims

1. Flexure wind vane and anemometer that make up a sensor to measure the speed and direction of the wind, designed to be used in medium to high power wind turbines, **characterized in that** its operation is based on the structural deformation of the supporting tower and on its measurement by means of a laser emitting device and an image capture device, immune to the turbulent airflow created by the rotation of the blades.

2. Flexure wind vane and anemometer, as described in the first claim, **characterized in that** the sensor supplies information about the mechanical stresses withstood by the wind turbine, and in general about the metallic towers subjected to peak stresses.

3. Flexure wind vane and anemometer, as described in the first claim, **characterized in that** the sensor optimises the control algorithms that correspond to the yaw, blade pitch and load regulation.

4. Flexure wind vane and anemometer, as described in the first claim, **characterized in that** the sensor does not contain any mobile parts and it is installed inside the wind turbine; therefore it is not in contact with atmospheric agents, which means a longer lifetime and less maintenance and cleaning.

5. Flexure wind vane and anemometer, as described in the first claim, **characterized in that** the sensor is a basic tool used for preventive maintenance that monitors and analyses structural forces in real time.
